# EUROPÄISCHE PATENTSCHRIFT

(11) **EP 1 655 521 B1**
(45) Veröffentlichungstag und Bekanntmachung des Hinweises auf die Patenterteilung: **16.04.2008**
(21) Anmeldenummer: 05023359.2
(22) Anmeldetag: 26.10.2005
(51) Int. Cl.: F16J 1/22

(54) **Kolbenanordnung einer hydraulischen Betätigungseinrichtung an Kraftfahrzeugen**
Piston arrangement for an hydraulic actuating device of a vehicle
Arrangement de piston pour un dispositif d'actionnement hydraulique de véhicule

(30) Priorität: 05.11.2004 DE 102004053913
(43) Veröffentlichungstag der Anmeldung: 10.05.2006
(73) Patentinhaber: FTE automotive GmbH, 96106 Ebern (DE)
(72) Erfinder: Liebig, Dirk, 96106 Ebern (DE); Gebert, Stefan, 96242 Sonnefeld (DE); Sperber, Christian, 96106 Ebern (DE); Steinmetz, Harry, 96106 Ebern (DE)
(74) Vertreter: Oppermann, Mark

(56) Entgegenhaltungen:
- DE-A1- 10 062 988
- DE-A1- 19 824 530
- US-A- 3 107 111
- US-A- 5 290 120

## Beschreibung

### TECHNISCHES GEBIET

Die Erfindung bezieht sich auf eine Kolbenanordnung für Geber- und/oder Nehmerzylinder einer hydraulischen Betätigungseinrichtung für Kupplungs- und/oder Bremssysteme an Kraftfahrzeugen, entsprechend dem Oberbegriff des Patentanspruchs 1.

### STAND DER TECHNIK

Bei einer derartigen bekannten Kolbenanordnung (DE 100 62 988 A1) wird die Montage in zwei getrennten Schritten vorgenommen. Hierbei wird zunächst die Schnappverbindung zwischen dem Stößel und dem Einsatzteil, dort Kolbengelenkkopf genannt, herbeigeführt. Die so vormontierte Einheit wird dann in die Ausnehmung eingesetzt und mittels eines Gewindeeingriffs darin eingeschraubt. Zu diesem Zweck sind die Ausnehmung mit einem Innengewinde und das Einsatzteil mit einem entsprechenden Außengewinde versehen. Die Herstellung dieser bekannten Kolbenanordnung ist wegen der Gewindeanbringung aufwendig, zumal für die Verhinderung des Lösens der Schraubverbindung besondere Maßnahmen ergriffen werden müssen. Auch die Montage in zwei Schritten ist gemessen an den Anforderungen der Massenfabrikation aufwendig, wobei die Handhabbarkeit der aus dem Stößel und dem Einsatzteil bestehenden vormontierten Einheit wegen der kugelgelenkigen Verbindung dieser Teile erschwert ist.

### DARSTELLUNG DER ERFINDUNG

Der Erfindung liegt die Aufgabe zugrunde, die Herstellung und die Montage der im Oberbegriff des Patentanspruchs 1 angegebenen Kolbenanordnung zu vereinfachen und das Einsatzteil auch ohne Gewindeeingriff gegenüber den Stößel eingeleitete hohe Auszugskräfte gesichert in der Ausnehmung des Kolbens zu befestigen.

Diese Aufgabe wird erfindungsgemäß durch die im Anspruch 1 angegebenen Merkmale gelöst. Vorteilhafte oder zweckmäßige Weiterbildungen der Erfindung gehen aus den Unteransprüchen hervor und sind nachfolgend ebenfalls beschrieben.

Bei der erfindungsgemäß ausgebildeten Kolbenanordnung wird zunächst das Einsatzteil in die Ausnehmung des Kolbens eingeführt, bis die Umfangsfase des Einsatzteils auf den ersten wegbegrenzenden Anschlag trifft. Am Ende dieses ersten Einführungswegs steht die zur Herstellung der Schnappverbindung auffederbare Einführungshülse des Einsatzteils aus der Ausnehmung des Kolbens nach außen vor.

Der dann in axialer Richtung des Kolbens mit seiner Endkugel voran in die Einführungshülse eingeschobene Stößel treibt die Endkugel mit der zur Überwindung der Federkräfte der Einführungshülse erforderlichen Axialkraft bis auf den Kugelsitz im Einsatzteil, wodurch die Schnappverbindung erfolgt ist. Hierbei bleibt das Einsatzteil an seinem ersten Anschlag in der Ausnehmung des Kolbens, weil die zur Herstellung der Schnappverbindung erforderliche Axialdruckkraft kleiner ist als die zum Übergleiten des ersten Anschlags auf den Stößel auszuübende Axialdruckkraft, d.h. kleiner ist als die Haltekraft am ersten Anschlag.

Bei Erhöhung der Axialdruckkraft am Stößel kommt es zum Übergleiten des ersten Anschlags in der Ausnehmung des Kolbens durch das Einsatzteil unter partieller elastischer und auch plastischer Verformung der dem ersten Anschlag anliegenden Bereiche des Einsatzteils. Der damit beginnende zweite Einführungsweg des Einsatzteils ist durch den zweiten Anschlag am inneren Ende der Ausnehmung begrenzt. Bei Anlage des Einsatzteils am zweiten Anschlag befindet sich die auffederbare Einführungshülse des Einsatzteils innerhalb der Ausnehmung und ist von der die Ausnehmung begrenzenden Kolbenwand eng umschlossen. In dieser Lage befindet sich die Endkugel des Stößels spielfrei im Kugelsitz und läßt sich auch unter Anwendung sehr großer Auszugskräfte nicht aus dem Einsatzteil und das Einsatzteil nicht aus dem Kolben herausziehen.

Die erfindungsgemäße Ausbildung der Kolbenanordnung ermöglicht eine sehr einfache Montage, bei welcher der Stößel mit seiner Endkugel in einer einzigen Axialbewegung in das in den Kolben eingesteckte Einsatzteil eingetrieben wird, wobei zunächst die Schnappverbindung hergestellt und unmittelbar danach das Einsatzteil in seine Endlage in die Ausnehmung eingeschoben wird. Hierbei kommt es zu keinen spielverursachenden Deformationen des Kugelgelenks, weil die Druckkraftübertragung auf das Einsatzteil über die formschlüssige großflächige Anlage zwischen Endkugel und Kugelsitz erfolgt.

In Verfolgung des Erfindungsgedankens ist die Ausnehmung als Sacklochbohrung mit einer bestimmten Profilierung ausgebildet, welche auch den ersten und den zweiten Anschlag für das Einsatzteil erzeugt, wie aus den Ansprüchen 2 bis 4 hervorgeht. Dementsprechend ist das Einsatzteil gemäß Anspruch 5 mit einem inneren zylindrischen Abschnitt und einem äußeren zylindrischen Abschnitt vergleichsweise größeren Durchmessers der Profilierung der Sacklochbohrung angepaßt ausgebildet, um die vorstehend erläuterte einfache Montierbarkeit und die Belastbarkeit auch gegenüber sehr großen Auszugskräften sicherzustellen.

Vorzugsweise sind entsprechend Anspruch 6 an der Umfangsfläche des inneren Abschnitts des Einsatzteils in gleichmäßiger Umfangsverteilung Nuten angebracht, die den tragenden Flächenkontakt zu demjenigen zylindrischen Bohrungsabschnitt der Sacklochbohrung verringern, der bei Überwindung der Haltekraft des ersten Anschlags durch partielle elastische/plastische Verformung des betreffenden Bereichs überglitten wird, wodurch zugleich die erforderliche axiale Einpreßkraft verringert wird. Einige dieser Nuten können eine größere axiale Länge als die Übrigen aufweisen, um den inneren geschlossenen Bereich der Sacklochbohrung im Kolben beim Einpressen des Einsatzteils zu entlüften.

Die Verformbarkeit des inneren Abschnitts des Einsatzteils beim Einpreßvorgang kann durch die im Anspruch 7 angegebene Aussparung vorteilhaft erhöht und damit die zum Einpressen erforderliche Axialkraft verringert werden. Durch die im Anspruch 8 angegebenen Rippen am Außenumfang der Einführungshülse des Einsatzteils kann zweckmäßig auch der tragende Flächenanteil der Einführungshülse beim Einpressen in den äußeren ersten Bohrungsabschnitt der Sacklochbohrung verringert werden, was die erforderliche axiale Einpreßkraft ebenfalls verringert.

Die im Anspruch 9 angegebene Ausbildung der Endkugel des Stößels erlaubt die völlig gratfreie Formung einer idealen Kugelkalotte, so daß ein spielfreier Sitz im Kugelsitz des Einsatzteils ermöglicht wird.

Vorteilhaft ist die Werkstoffwahl für die drei Komponenten der Kolbenanordnung so getroffen, wie im Anspruch 10 angegeben ist. Durch die Verwendung von Aluminium oder einer Aluminiumlegierung für den Kolben kann dieser im Bereich der Einführungshülse des Einsatzteils ohne Festigkeitsbedenken vergleichsweise sehr dünnwandig ausgebildet werden, ohne daß beim Einpressen des Einsatzteils oder bei axialen Zugbelastungen über den Stößel Verformungen der Kolbenwandung zu befürchten sind. Dadurch kann auch das Einsatzteil in diesem Bereich einen größeren Durchmesser erhalten, was wiederum einen vorteilhaft großen Kugelsitz- und Kugeldurchmesser erlaubt.

### KURZE BESCHREIBUNG DER ZEICHNUNGEN

Weitere Einzelheiten der Erfindung werden nachfolgend unter Bezugnahme auf die ein Ausführungsbeispiel darstellenden Zeichnungen näher beschrieben. Darin zeigt:
- Fig. 1: den Längsschnitt durch die fertig montierte Kolbenanordnung, mit einer den Kolben umschließenden Führungshülse, in welcher der Kolben verschiebbar geführt ist und welche in ein abgebrochen dargestelltes Gehäuse eines Geber- oder Nehmerzylinders eingeschoben und darin festgelegt ist,
- Fig. 2: einen abgebrochenen Längsschnitt durch das äußere Ende des Kolbens und die darin vorgesehene Ausnehmung,
- Fig. 3: eine Perspektivansicht des Einsatzteils,
- Fig. 4: die Vorderansicht des Einsatzteils in Blickrichtung des Pfeils IV in Fig. 3,
- Fig. 5: die Schnittansicht des Einsatzteils entsprechend der Schnittverlaufslinie V-V in Fig. 4,
- Fig. 6: einen abgebrochenen Längsschnitt durch das äußere Kolbenende entsprechend Fig. 2, jedoch mit bis zum ersten Anschlag in die Ausnehmung eingeschobenen Einsatzteil,
- Fig. 7: einen abgebrochenen Längsschnitt durch das äußere Kolbenende und durch das Einsatzteil ähnlich Fig. 6, jedoch mit auf den Kolben aufgeschobener Führungshülse und dem an die Einführungshülse des Einsatzteils herangeführten Kugelende des Stößels,
- Fig. 8: einen der Fig. 7 entsprechenden Längsschnitt, jedoch nach herbeigeführter Schnappverbindung des Kugelendes mit der Einführungshülse des Einsatzteils, und
- Fig. 9: einen den Fig. 7 und 8 entsprechenden Längsschnitt, jedoch nach vollendeter Montage der Kolbenanordnung mit bis an den zweiten Anschlag in die Ausnehmung eingepreßtem Einsatzteil.

### DETAILLIERTE BESCHREIBUNG DES AUSFÜHRUNGSBEISPIELS

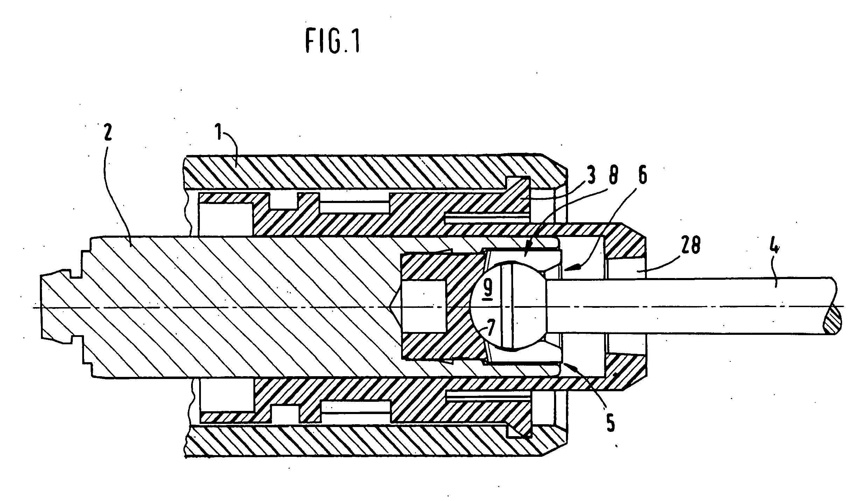

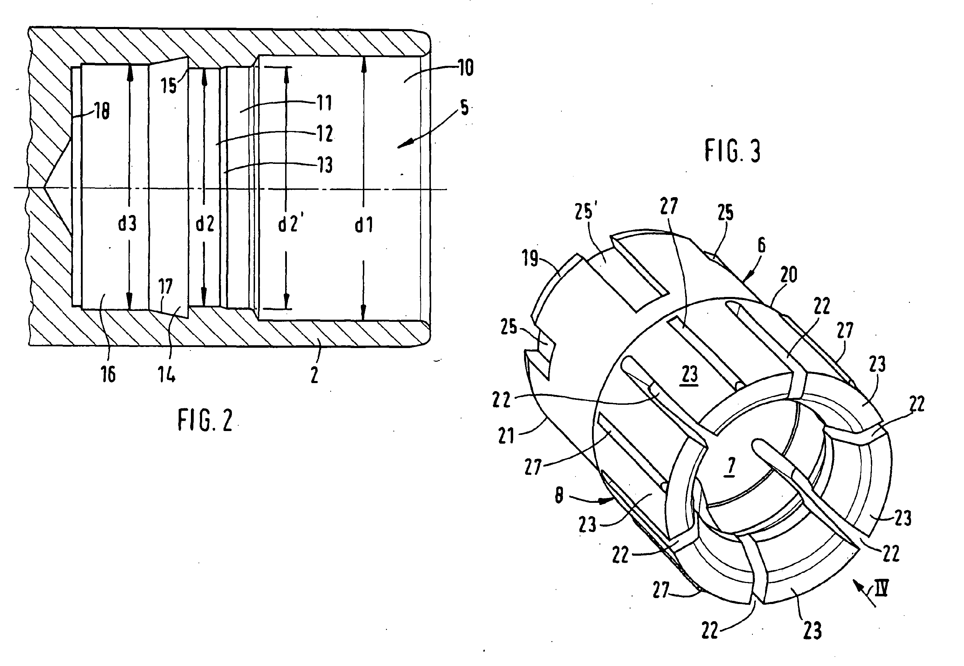

Die Kolbenanordnung, die damit in Verbindung stehenden Teile des Geber- oder Nehmerzylinders und ihre Einzelteile sind in den Zeichnungen zur Verdeutlichung gegenüber den tatsächlichen Abmessungen vergrößert dargestellt, wobei die Fig. 2 bis 9 wiederum gegenüber Fig. 1 in einem größeren Maßstab dargestellt sind.

Von dem Geber- oder Nehmerzylinder ist in Fig. 1 lediglich der die Kolbenanordnung aufnehmende Teil des Gehäuses 1 abgebrochen gezeichnet, weil sich die Erfindung nicht auf die Ausbildung des Geber- oder Nehmerzylinders erstreckt. Entsprechendes gilt für die Anordnung von Dichtungen zwischen dem Gehäuse 1 und der den Kolben 2 umschließenden Führungshülse 3 sowie der am inneren Ende des Kolbens 2 anzubringenden Dichtungsanordnungen, die sämtlich in Fig. 1 nicht eingezeichnet sind. Der Kolben 2 ist ein sogenannter Plungerkolben, der eine zylindrische Außenumfangsfläche besitzt, der in der Führungshülse 3 abgedichtet verschiebbar geführt und mittels des Stößels 4 in Druck- und Zugrichtung bewegbar ist.

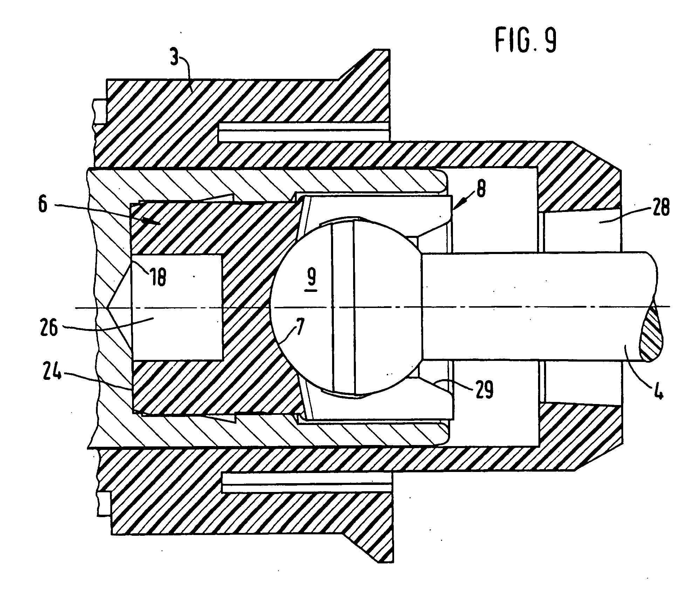

Der Kolben 2 besitzt in seinem äußeren Ende eine Ausnehmung 5, die als eine mit der Mittelachse des Kolbens 2 konzentrische Sacklochbohrung mit mehreren zylindrischen Bohrungsabschnitten unterschiedlichen Durchmessers ausgebildet ist, wie am besten aus Fig. 2 ersichtlich ist und weiter unten noch näher beschrieben wird. Ein zur Befestigung in der Ausnehmung 5 angepaßtes Einsatzteil 6 besitzt einen Kugelsitz 7 und eine bezüglich des Kugelsitzes 7 hinterschnittene Einführungshülse 8. Die Einführungshülse 8 ist auf noch näher zu beschreibende Weise geschlitzt und somit auffederbar. Bei vollständiger Einführung in die Ausnehmung 5 ist die Einführungshülse 8 von der die Ausnehmung 5 begrenzenden Kolbenwand eng umschlossen, wie aus den Fig. 1 und 9 hervorgeht.

Der die Betätigungswege und -kräfte übertragende Stößel 4 ist mit einem dem Kugelsitz 7 im Einsatzteil 6 komplementär geformten Kugelende 9 versehen, das mit dem Einsatzteil 6 zur gelenkigen Lagerung des Stößels 4 über eine durch die auffederbare Einführungshülse 8 ermöglichte Schnappverbindung kuppelbar ist. Die vollzogene Kupplung ist in den Fig. 1, 8 und 9 dargestellt.

Wie aus Fig. 2 hervorgeht, besitzt die als Sacklochbohrung ausgebildete Ausnehmung 5 im wesentlichen vier Bohrungsabschnitte, von denen der äußere erste Bohrungsabschnitt 10 den größten Durchmesser d1 besitzt, welcher dem Außendurchmesser der Einführungshülse 8 des Einsatzteils 6 angepaßt ist. Dem ersten Bohrungsabschnitt 10 folgt mit einem demgegenüber kleineren Durchmesser d2' der zweite Bohrungsabschnitt 11. An diesen schließt sich der dritte Bohrungsabschnitt 12 mit einem nur geringfügig kleineren Durchmesser d2 mit einer Übergangsfase 13 an, welche einen ersten Anschlag für das Einsatzteil 6 bildet. Der dritte Bohrungsabschnitt 12 endet mit einer durch eine Ringnut 14 erzeugten scharfen Kante 15, so daß von außen nach innen gesehen hinter dem dritten Bohrungsabschnitt 12 ein Hinterschnitt gebildet ist. Der Ringnut 14 folgt der vierte Bohrungsabschnitt 16, an welchen die Ringnut 14 mit einer konischen Übergangsfläche 17 anschließt und welcher einen Durchmesser d3 aufweist, der größer ist als die Durchmesser d2' und d2 des zweiten und dritten Bohrungsabschnitts 11 bzw. 12. Die Ausnehmung 5 endet nach dem vierten Bohrungsabschnitt 16 an einer zur Mittelachse des Kolbens 2 senkrechten Fläche 18, welche einen zweiten Anschlag für des Einsatzteil 6 bildet.

Zur Beschreibung des Einsatzteils 6 wird nunmehr auf die Fig. 3 bis 5 Bezug genommen. Das Einsatzteil 6 ist an seinem inneren Ende mit einer Umfangsfase 19 versehen, die auch als Kantenabrundung ausgebildet sein kann. Diese Umfangsfase 19 trifft auf die den ersten wegbegrenzenden Anschlag bildende Übergangsfase 13 auf, wenn das Einsatzteil 6 in die Ausnehmung 5 eingeführt wird. Das Einsatzteil 6 besitzt zwei im wesentlichen zylindrische Abschnitte 20 und 21, von denen der äußere Abschnitt 20 den größeren Durchmesser besitzt und die Einführungshülse 8 bildet. Diese ist durch mehrere umfänglich gleichmäßig verteilte achsparallele Schlitze 22, im gezeichneten Beispiel durch sechs Schlitze 22, in ihrer Wandung, welche federnde Zungen 23 bilden, im gezeichneten Beispiel sind es sechs Zungen 23, auffederbar. Der innere Abschnitt 21 des Einsatzteils 6 besitzt den kleineren Durchmesser, der mit dem Durchmesser d2 des dritten Bohrungsabschnitts 12 der Ausnehmung 5 des Kolbens 2 eine Preßpassung bildet.

Der innere Abschnitt 21 des Einsatzteils 6 besitzt in seiner Umfangsfläche mehrere bis zu seiner Stirnfläche 24 durchgehende achsparallele Nuten 25, von denen einige Nuten 25' eine größere axiale Länge aufweisen und beim Einpressen des Einsatzteils 6 in die Ausnehmung 5 der Entlüftung derselben dienen. Im Übrigen aber verringern die Nuten 25, 25' den tragenden Flächenanteil des inneren Abschnitts 21 gegenüber dem dritten Bohrungsabschnitt 12 und verringern daher die erforderlichen Einpreßkräfte. Vergleichbare Effekte ergeben sich einerseits dadurch, daß das Einsatzteil 6 in der Stirnfläche 24 seines inneren Abschnitts 21 eine konzentrische Aussparung 26 besitzt, welche Verformungen des inneren Endes des inneren Abschnitts 21 beim Einpreßvorgang erleichtert, und andererseits dadurch, daß die Einführungshülse 8 des Einsatzteils 6 an ihrem Außenumfang verteilt mehrere achsparallele kleine Rippen 27 aufweist, welche die tragende Fläche des äußeren Abschnitts 20 des Einsatzteils 6 gegenüber der Wandfläche des ersten Bohrungsabschnitts 10 verringern.

Das Kugelende 9 des Stößels 4 ist in ihren Druck- und Zugkräfte übertragenden Flächenbereichen formteilungsgratfrei geformt, wodurch das aus dem Kugelsitz 7 und dem Kugelende 9 gebildete Kugelgelenk mit engen Toleranzen praktisch spielfrei gefertigt werden kann, weil im Berührungsbereich der konvexen und konkaven Kugelflächen kein deformierbarer und damit spielbildender Grat vorhanden ist.

Geeignete Werkstoffpaarungen entstehen, wenn der Kolben 2 aus Aluminium oder einer Aluminiumlegierung hergestellt ist, während das Einsatzteil 6 und der Stößel 4 mit seinem Kugelende 9 aus thermoplastischen Kunststoffen geformt sind. Geeignet sind hierfür beispielsweise glasfaserarmierte Polyamide.

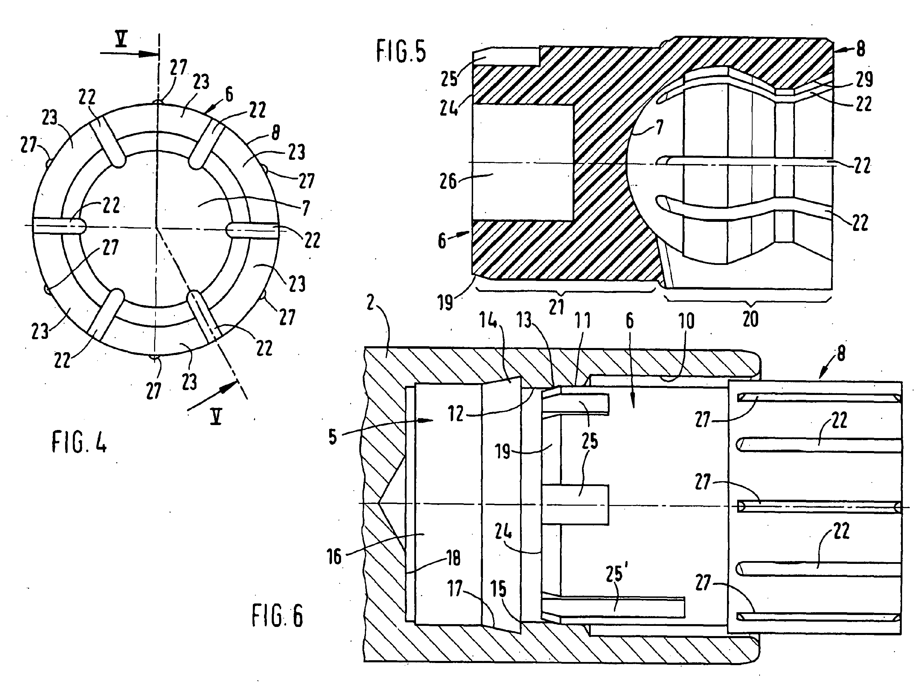

Die Reihenfolge der Arbeitsschritte zur Montage der beschriebenen Kolbenanordnung ist in den Fig. 6 bis 9 dargestellt. Zunächst wird das Einsatzteil 6 mit seinem inneren Abschnitt 21 in den zweiten Bohrungsabschnitt 11 und gleichzeitig mit seinem äußeren Abschnitt 20 in den ersten Bohrungsabschnitt 10 eingeschoben, bis die Umfangsfase 19 auf die den ersten wegbegrenzenden Anschlag bildende Übergangsfase 13 trifft. In dieser Stellung der Teile steht das Einsatzteil 6 mit seiner auffederbaren Einführungshülse 8 im wesentlichen aus der Ausnehmung 5 des Kolbens 2 nach außen vor, wie Fig. 6 veranschaulicht. Damit sind der Kolben 2 und das Einsatzteil 6 zur Herstellung der Schnappverbindung bereit.

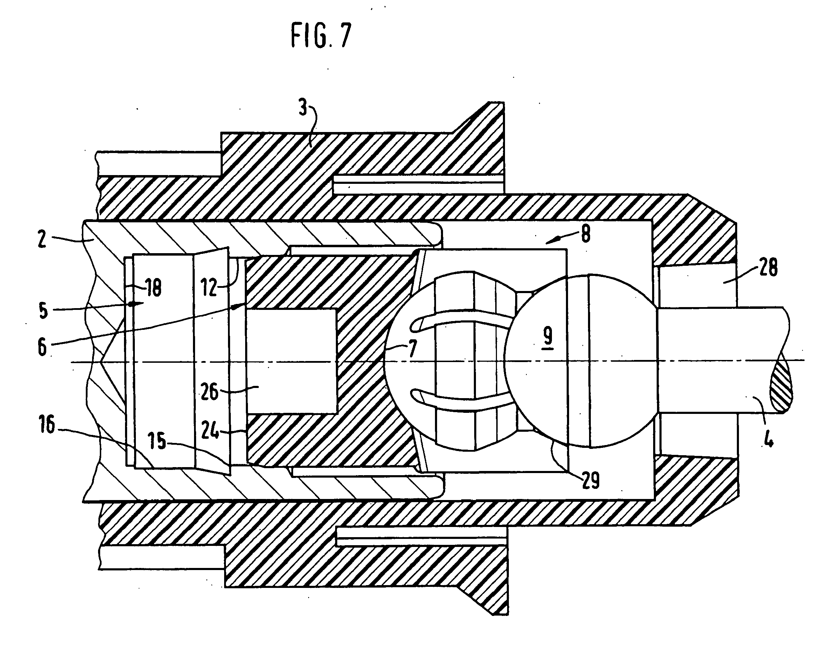

Der Kolben 2 mit dem Einsatzteil 6 kann jetzt in die Führungshülse 3 eingeschoben werden, wie das in Fig. 7 dargestellt ist.

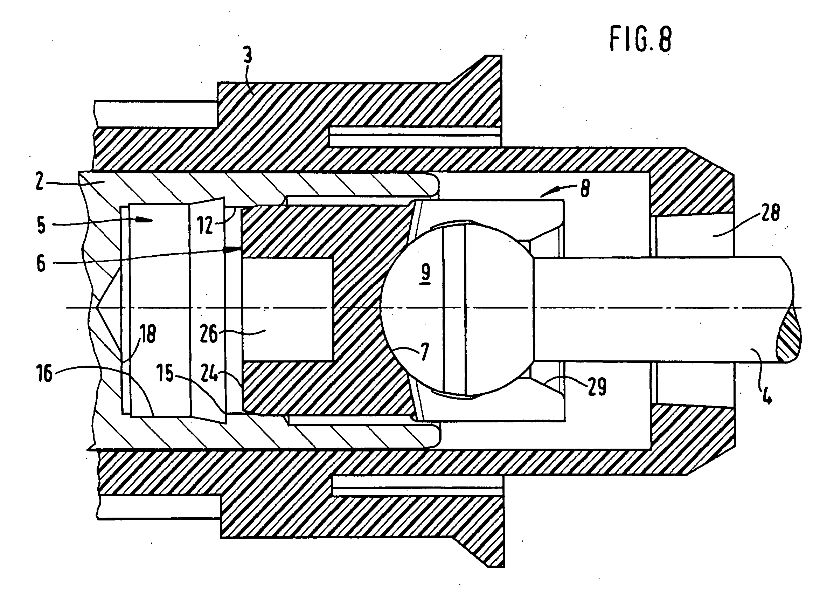

Der Stößel 4 wird mit seinem Kugelende 9 durch eine Öffnung 28 in der Stirnwand der Führungshülse 3 hindurch bis zur Einführungshülse 8 eingeführt, wobei er auf eine das Auffedern der Einführungshülse 8 ermöglichende etwa kegelstumpfförmige Umfangsfase 29 der Einführungshülse 8 trifft. Die federnden Zungen 23 weichen jetzt bei fortgesetztem Einführungsvorgang seitlich nach außen aus, bis sie infolge des Hinterschnitts vor dem Kugelsitz 7 hinter dem Kugelende 9 einschnappen, wobei das Kugelende 9 formschlüssig in den Kugelsitz 7 gelangt. Diese Position ist in Fig. 8 dargestellt.

Die zur Herbeiführung der Schnappverbindung auf den Stößel 4 auszuübende Axialdruckkraft ist kleiner als die zu einem Übergleiten des ersten Anschlags auf den Stößel 4 auszuübende Axialdruckkraft. Das Einsatzteil 6 bleibt daher während der Herstellung der Schnappverbindung in der in den Fig. 7 und 8 gezeigten Position am ersten wegbegrenzenden Anschlag, d.h. die Umfangsfase 19 des Einsatzteils 6 wird der Übergangsfase 13 zwischen dem zweiten und dem dritten Bohrungsabschnitt 11 bzw. 12 angepreßt.

Wird jetzt die Axialdruckkraft auf den Stößel 4 vergrößert, so gleitet das Einsatzteil 6 unter partieller elastischer und plastischer Verformung des vorderen Endes seines inneren Abschnitts 21 über den ersten Anschlag hinweg, weil die Haltekraft des ersten Anschlags überwunden wird. Damit beginnt ein zweiter Einführungsweg des Einsatzteils 6, der schließlich durch Auftreffen der Stirnfläche 24 auf die den zweiten Anschlag bildende Fläche 18 der Ausnehmung 5 begrenzt und damit beendet ist. Diese Position der Teile geht aus Fig. 9 und auch aus Fig. 1 hervor. In der Praxis wird die Einführung des Stößels 4 mit seinem Kugelende 9 nicht in zwei zeitlich voneinander getrennten Einführungsbewegungen vorgenommen, sondern erfolgt in einem einzigen zusammenhängenden Einpreßvorgang.

Hinter der scharfen Kante 15 kommt es beim Einpressen und Übergleiten des ersten Anschlags zu einer partiellen elastischen Rückverformung des Einsatzteils 6, so daß dieses auch gegen sehr hohe über den Stößel 4 eingeleitete Auszugskräfte in der Ausnehmung 5 in der in den Fig. 1 und 9 gezeigten Lage festgehalten wird. Da hierbei auch die Einführungshülse 8 vollständig von der festen Wandung des Kolbens 2 umschlossen ist, können auch sehr hohe Auszugskräfte das Kugelende 9 nicht aus dem Kugelsitz 7 herausziehen, weil die federnden Zungen 23 nicht seitwärts ausweichen können.

Es wird eine Kolbenanordnung für Geber- und/oder Nehmerzylinder einer hydraulischen Betätigungseinrichtung für Kupplungs- und/oder Bremssysteme an Kraftfahrzeugen vorgeschlagen, die sich durch eine vereinfachte Herstellung und Montage ihrer Bestandteile auszeichnet und auch großen über den Stößel eingeleiteten Auszugskräften standhält. In eine als Sacklochbohrung ausgebildete Ausnehmung des Kolbens wird bis zu einem ersten Anschlag ein angepaßtes Einsatzteil eingesetzt, das einen Kugelsitz und eine diesbezüglich hinterschnittene auffederbare Einführungshülse aufweist, die zunächst mit ihrem auffederbaren Bereich nach außen vorsteht. Der Stößel wird mit seinem dem Kugelsitz komplementär geformten Kugelende in axialer Richtung in die auffederbare Einführungshülse gedrückt, bis das Kugelende in den Kugelsitz einschnappt. Bei fortgesetzter axialer Einpressung des Stößels übergleitet das Einsatzteil den ersten Anschlag, wird fest in einen engen Bohrungsabschnitt der Ausnehmung eingepreßt und trifft schließlich auf einen wegbegrenzenden zweiten Anschlag am inneren Ende der Ausnehmung auf. In dieser Position wird die Einführungshülse eng von der Kolbenwand umschlossen und kann auch bei sehr großen Auszugskräften nicht mehr auffedern, d.h. das Kugelende des Stößels nicht freigeben.

### BEZUGSZEICHENLISTE

- 1: Gehäuse
- 2: Kolben
- 3: Führungshülse
- 4: Stößel
- 5: Ausnehmung
- 6: Einsatzteil
- 7: Kugelsitz
- 8: Einführungshülse
- 9: Kugelende
- 10: äußerer erster Bohrungsabschnitt
- 11: zweiter Bohrungsabschnitt
- 12: dritter Bohrungsabschnitt
- 13: Übergangsfase
- 14: Ringnut
- 15: scharfe Kante
- 16: vierter Bohrungsabschnitt
- 17: konische Übergangsfläche
- 18: senkrechte Fläche
- 19: Umfangsfase
- 20: äußerer zylindrischer Abschnitt
- 21: innerer zylindrischer Abschnitt
- 22: Schlitze
- 23: federnde Zungen
- 24: Stirnfläche
- 25, 25': achsparallele Nuten
- 26: Aussparung
- 27: Rippen
- 28: Öffnung
- 29: Umfangsfase

## Patentansprüche

1. Kolbenanordnung für Geber- und/oder Nehmerzylinder einer hydraulischen Betätigungseinrichtung für Kupplungs- und/oder Bremssysteme an Kraftfahrzeugen, umfassend
einen Kolben (2) mit einer Ausnehmung (5) in seinem äußeren Ende,
ein zur Befestigung in der Ausnehmung (5) angepaßtes Einsatzteil (6) mit einem Kugelsitz (7) und einer bezüglich des Kugelsitzes (7) hinterschnittenen Einführungshülse (8), die geschlitzt und somit auffederbar ist und bei vollständiger Einführung in die Ausnehmung (5) von der die Ausnehmung (5) begrenzenden Kolbenwand eng umschlossen ist, und
einen die Betätigungswege und -kräfte übertragenden Stößel (4) mit einem dem Kugelsitz (7) komplementär geformten Kugelende (9), das mit dem Einsatzteil (6) zur gelenkigen Lagerung des Stößels (4) über eine durch die auffederbare Einführungshülse(8) ermöglichte Schnappverbindung kuppelbar ist,
**dadurch gekennzeichnet,**
**daß** das Einsatzteil (6) an seinem inneren Ende mit einer Umfangsfase (19) od. dgl. versehen ist, der innerhalb der Ausnehmung (5) des Kolbens (2) ein erster Anschlag zur Begrenzung eines ersten Einführungsweges des Einsatzteils (6) in die Ausnehmung (5) zugeordnet ist, wobei das dem ersten Anschlag anliegende Einsatzteil (6) mit seiner auffederbaren Einführungshülse (8) im wesentlichen aus der Ausnehmung (5) des Kolbens (2) zur Herstellung der Schnappverbindung.nach außen vorsteht,
**daß** die zur Herbeiführung der Schnappverbindung auf den Stößel (4) auszuübende Axialdruckkraft kleiner ist als die zu einem Übergleiten des ersten Anschlags in der Ausnehmung (5) durch das Einsatzteil (6) auf den Stößel (4) auszuübende Axialdruckkraft, und
**daß** ein mit dem Übergleiten beginnender zweiter Einführungsweg des Einsatzteils (6) durch einen zweiten Anschlag am inneren Ende der Ausnehmung (5) begrenzt ist.

2. Kolbenanordnung nach Anspruch 1, **dadurch gekennzeichnet, daß** die Ausnehmung (5) eine mit der Mittelachse des Kolbens (2) konzentrische Sacklochbohrung mit mehreren zylindrischen Bohrungsabschnitten (10, 11, 12, 16) unterschiedlichen Durchmessers ist.

3. Kolbenanordnung nach Anspruch 2, **dadurch gekennzeichnet, daß** die Sacklochbohrung im wesentlichen vier zylindrische Bohrungsabschnitte (10, 11, 12, 16) aufweist, von denen der äußere erste Bohrungsabschnitt (10) den größten Durchmesser (d1) besitzt, welcher dem Außendurchmesser der Einführungshülse (8) des Einsatzteils (6) angepaßt ist, dem der zweite Bohrungsabschnitt (11) kleineren Durchmessers (d2') folgt, an welchen sich der dritte Bohrungsabschnitt (12) mit gegenüber dem zweiten Bohrungsabschnitt (11) nur geringfügig kleinerem Durchmesser (d2) mit einer den ersten Anschlag bildenden Übergangsfase (13) anschließt, wobei der dritte Bohrungsabschnitt (12) mit einer durch eine Ringnut (14) erzeugten scharfen Kante (15) endet, wobei der Ringnut (14) der vierte Bohrungsabschnitt (16) folgt, an welchen die Ringnut (14) mit einer konischen Übergangsfläche (17) anschließt und welcher einen Durchmesser (d3) aufweist, der größer ist als die Durchmesser (d2',d2) des zweiten und dritten Bohrungsabschnitts (11, 12).

4. Kolbenanordnung nach Anspruch 3, **dadurch gekennzeichnet, daß** die Ausnehmung (5) nach dem vierten Bohrungsabschnitt (16) an einer zur Mittelachse des Kolbens (2) senkrechten Fläche (18) endet, welche den zweiten Anschlag für das Einsatzteil (6) bildet.

5. Kolbenanordnung nach Anspruch 3 oder 4, **dadurch gekennzeichnet, daß** das Einsatzteil (6) zwei im wesentlichen zylindrische Abschnitte (20, 21) unterschiedlichen Durchmessers besitzt, von denen der äußere Abschnitt (20) den größeren Durchmesser besitzt und die Einführungshülse (8) bildet, die durch mehrere achsparallele Schlitze (22) in ihrer Wandung auffederbar ist, während der innere Abschnitt (21) den kleineren Durchmesser besitzt, der mit dem Durchmesser (d2) des dritten Bohrungsabschnitts (12) der Ausnehmung (5) des Kolbens (2) eine Preßpassung bildet.

6. Kolbenanordnung nach Anspruch 5, **dadurch gekennzeichnet, daß** der innere Abschnitt (21) des Einsatzteils (6) in seiner Umfangsfläche mehrere bis zu seiner Stirnfläche (24) durchgehende achsparallele Nuten (25, 25') besitzt.

7. Kolbenanordnung nach Anspruch 5 oder 6, **dadurch gekennzeichnet, daß** das Einsatzteil (6) in der Stirnfläche (24) seines inneren Abschnitts (21) eine konzentrische Aussparung (26) besitzt.

8. Kolbenanordnung nach einem der Ansprüche 1 bis 7, **dadurch gekennzeichnet, daß** die Einführungshülse (8) des Einsatzteils (6) an ihrem Außenumfang verteilt mehrere achsparallele Rippen (27) aufweist.

9. Kolbenanordnung nach einem der Ansprüche 1 bis 8, **dadurch gekennzeichnet, daß** das Kugelende (9) in seinen Druck- und Zugkräfte übertragenden Flächenbereichen formteilungsgratfrei geformt ist.

10. Kolbenanordnung nach einem der Ansprüche 1 bis 9, **dadurch gekennzeichnet, daß** der Kolben (2) aus Aluminium oder einer Aluminiumlegierung hergestellt ist, während das Einsatzteil (6) und der Stößel (4) aus Kunststoff geformt sind.

## Claims

1. Piston arrangement for master and/or slave cylinders of a hydraulic actuating device for clutch and/or brake systems on motor vehicles, comprising
a piston (2) with a recess (5) in its outer end,
an insert (6) adapted for fixing in the recess (5), said insert having a ball seat (7) and an insertion sleeve (8) which is undercut with respect to the ball seat (7), said insertion sleeve having slits and thus being expandable and, when it is fully inserted in the recess (5), being tightly enclosed by the piston wall which delimits the recess (5), and
a ram (4) which transmits the actuating travels and forces, said ram having a ball end (9) which is shaped so as to be complementary to the ball seat (7), which ball end (9) can be coupled to the insert (6) in order to mount the ram (4) in an articulated manner via a snap connection brought about by the expandable insertion sleeve (8),
**characterized**
**in that** the insert (6) is provided with a peripheral chamfer (19) or the like at its inner end, said peripheral chamfer being assigned, within the recess (5) of the piston (2), a first stop for delimiting a first insertion travel of the insert (6) in the recess (5), wherein the insert (6) bearing against the first stop protrudes outwards with its expandable insertion sleeve (8) substantially out of the recess (5) of the piston (2) to produce the snap connection,
**in that** the axial pressure force that is to be exerted on the ram (4) in order to bring about the snap connection is smaller than the axial pressure force that is to be exerted on the ram (4) in order for the insert (6) to slide over the first stop in the recess (5), and
**in that** a second insertion travel of the insert (6) which starts with the sliding-over is delimited by a second stop at the inner end of the recess (5).

2. Piston arrangement according to Claim 1, **characterized in that** the recess (5) is an elongate blind hole which is concentric with the central axis of the piston (2) and has a number of cylindrical hole sections (10, 11, 12, 16) of different diameter.

3. Piston arrangement according to Claim 2, **characterized in that** the elongate blind hole has essentially four cylindrical hole sections (10, 11, 12, 16), of which the outer, first hole section (10) has the largest diameter (d1) which is adapted to the external diameter of the insertion sleeve (8) of the insert (6), said first hole section (10) being followed by the second hole section (11) of smaller diameter (d2') and then the third hole section (12) having a diameter (d2) which is only slightly smaller than that of the second hole section (11), said third hole section (12) having a transitional chamfer (13) which forms the first stop, wherein the third hole section (12) ends with a sharp edge (15) produced by an annular groove (14), wherein the annular groove (14) is followed by the fourth hole section (16) which adjoins the annular groove (14) with a conical transition face (17) and which has a diameter (d3) that is larger than the diameters (d2', d2) of the second and third hole sections (11, 12).

4. Piston arrangement according to Claim 3, **characterized in that** the recess (5) ends, after the fourth hole section (16), at a face (18) perpendicular to the central axis of the piston (2), which face (18) forms the second stop for the insert (6).

5. Piston arrangement according to Claim 3 or 4, **characterized in that** the insert (6) has two essentially cylindrical sections (20, 21) of different diameter, of which the outer section (20) has the larger diameter and forms the insertion sleeve (8), which is expandable by virtue of a number of axis-parallel slits (22) in its wall, whereas the inner section (21) has the smaller diameter which forms a press fit with the diameter (d2) of the third hole section (12) of the recess (5) of the piston (2).

6. Piston arrangement according to Claim 5, **characterized in that** the inner section (21) of the insert (6) has in its circumferential surface a number of axis-parallel grooves (25, 25') which continue up to its end face (24).

7. Piston arrangement according to Claim 5 or 6, **characterized in that** the insert (6) has a concentric cut-out (26) in the end face (24) of its inner section (21).

8. Piston arrangement according to any of Claims 1 to 7, **characterized in that** the insertion sleeve (8) of the insert (6) has a number of axis-parallel ribs (27) distributed over its outer circumference.

9. Piston arrangement according to any of Claims 1 to 8, **characterized in that** the ball end (9) is shaped so as to be free of any ridges in its surface regions which transmit pressure forces and tensile forces.

10. Piston arrangement according to any of Claims 1 to 9, **characterized in that** the piston (2) is made of aluminum or an aluminum alloy, whereas the insert (6) and the ram (4) are molded from plastic.

## Revendications

1. Agencement de piston pour maître-cylindre et/ou vérin récepteur d'un système d'actionnement hydraulique pour des systèmes d'embrayage et/ou de freinage dans des véhicules automobiles, comprenant
un piston (2) présentant un évidement (5) dans son extrémité extérieure,
une pièce d'insert (6) adaptée à être fixée dans l'évidement (5) et comportant un logement de portée sphérique (7) et une douille d'introduction (8) en contre-dépouille par rapport au logement de portée sphérique (7), qui est fendue et peut s'ouvrir élastiquement, et qui, lorsqu'elle est entièrement introduite dans l'évidement (5), est entourée étroitement par la paroi de piston délimitant l'évidement (5), et
un poussoir (4) transmettant les déplacements et les forces d'actionnement, et comportant une extrémité en rotule sphérique (9) de forme complémentaire à celle du logement de portée sphérique (7), qui peut être couplée à la pièce d'insert (6) pour le montage articulé du poussoir (4), par l'intermédiaire d'une liaison par encliquetage ou enclenchement rendue possible par la douille d'introduction (8) pouvant s'ouvrir élastiquement,
**caractérisé**
**en ce que** la pièce d'insert (6) est pourvue à son extrémité intérieure, d'un chanfrein périphérique (19) ou similaire, auquel est associée, à l'intérieur de l'évidement (5) du piston (2), une première butée pour limiter un premier déplacement d'introduction de la pièce d'insert (6) dans l'évidement (5), la pièce d'insert (6) en appui contre la première butée, faisant saillie vers l'extérieur, sensiblement hors de l'évidement (5) du piston (2), avec sa douille d'introduction (8) pouvant s'ouvrir élastiquement, en vue de l'établissement de la liaison par enclenchement,
**en ce que** la force de compression axiale à exercer sur le poussoir (4) pour établir la liaison par enclenchement, est inférieure à la force de compression axiale à exercer sur le poussoir (4) pour que la pièce d'insert (6) passe par glissement par-dessus la première butée dans l'évidement (5), et
**en ce qu'**un deuxième déplacement d'introduction de la pièce d'insert (6), qui débute lors dudit passage par glissement, est limité par une deuxième butée à l'extrémité intérieure de l'évidement (5).

2. Agencement de piston selon la revendication 1, **caractérisé en ce que** l'évidement (5) est un alésage borgne, concentrique à l'axe central du piston (2), et présentant plusieurs tronçons d'alésage cylindriques (10, 11, 12, 16) de diamètre différent.

3. Agencement de piston selon la revendication 2, **caractérisé en ce que** l'alésage borgne présente essentiellement quatre tronçons d'alésage cylindriques (10, 11, 12, 16) dont le premier tronçon d'alésage (10) le plus à extérieur possède le plus grand diamètre (d1) qui est adapté au diamètre extérieur de la douille d'introduction (8) de la pièce d'insert (6), auquel succède le deuxième tronçon d'alésage (11) de diamètre (d2') plus petit, auquel se raccorde le troisième tronçon d'alésage (12) d'un diamètre (d2) seulement très légèrement plus petit, en formant un chanfrein de transition (13) constituant la première butée, le troisième tronçon d'alésage (12) se terminant par une arête vive (15) engendrée par une rainure annulaire (14), la rainure annulaire (14) étant suivie du quatrième tronçon d'alésage (16) auquel se raccorde la rainure annulaire (14) par une surface de transition (17) conique, et qui présente un diamètre (d3) qui est supérieur aux diamètres (d2', d2) du deuxième et du troisième tronçon d'alésage (11, 12).

4. Agencement de piston selon la revendication 3, **caractérisé en ce que** l'évidement (5) se termine, après le quatrième tronçon d'alésage (16), au niveau d'une surface (18) perpendiculaire à l'axe central du piston (2), qui constitue la deuxième butée pour la pièce d'insert (6).

5. Agencement de piston selon la revendication 3 ou 4, **caractérisé en ce que** la pièce d'insert (6) possède deux tronçons (20, 21) sensiblement cylindriques, de diamètre différent, dont le tronçon (20) le plus à l'extérieur possède le diamètre le plus grand et forme la douille d'introduction (8) pouvant s'ouvrir de manière élastique grâce à plusieurs fentes (22) dans sa paroi, qui sont parallèles à l'axe, tandis que le tronçon intérieur (21) possède le diamètre le plus faible, qui forme un ajustement serré avec le diamètre (d2) du troisième tronçon d'alésage (12) de l'évidement (5) du piston (2).

6. Agencement de piston selon la revendication 5, **caractérisé en ce que** le tronçon intérieur (21) de la pièce d'insert (6) possède dans sa surface périphérique, plusieurs fentes (25, 25') continues jusqu'à sa surface frontale (24) et parallèles à l'axe.

7. Agencement de piston selon la revendication 5 ou 6, **caractérisé en ce que** la pièce d'insert (6) possède dans la surface frontale (24) de son tronçon intérieur (21), un évidement (26) concentrique.

8. Agencement de piston selon l'une des revendications 1 à 7, **caractérisé en ce que** la douille d'introduction (8) de la pièce d'insert (6) présente, réparties sur sa périphérie extérieure, plusieurs nervures (27) parallèles à l'axe.

9. Agencement de piston selon l'une des revendications 1 à 8, **caractérisé en ce que** l'extrémité en rotule sphérique (9) est formée, dans ses zones de surface transmettant des forces de compression et de traction, de manière à être exempt de bavures de joint de moule.

10. Agencement de piston selon l'une des revendications 1 à 9, **caractérisé en ce que** le piston (2) est fabriqué en aluminium ou en un alliage d'aluminium, tandis que la pièce d'insert (6) et le poussoir (4) sont moulés en matière plastique.
